# EUROPEAN PATENT APPLICATION

(11) **EP 1 135 981 A2**
(43) Date of publication of application: **26.09.2001**
(21) Application number: 01106223.9
(22) Date of filing: 14.03.2001
(51) Int. Cl.: A01D 43/077

(54) **Mowing machine**

(30) Priority: 17.03.2000 IT MO000047
(71) Applicant: Ori, Franco, 41019 Sozzigalli di Soliera, Modena (IT)
(72) Inventor: Ori, Franco, 41019 Sozzigalli di Soliera, Modena (IT)
(74) Representative: Luppi, Luigi

(57) **Abstract**

A mowing machine comprises cutting means (2) suitable for mowing grass, possible collecting means (3), suitable for collecting and storing said grass, comprising mechanical collecting means (12) associated with pneumatic collecting means (32), moving means (4) suitable for actuating said machine (1) and steering means (5) suitable for allowing said machine (1) to be steered; furthermore positioning means (8) of said cutting means is provided, suitable for vertically adjusting the distance of said cutting means (2) from the ground.

## Description

The invention relates to a mowing machine, particularly to a machine for mowing grass and collecting the mown grass.

Machines are known for cutting and collecting grass in plots of moderately extended dimensions, comprising devices for moving and steering said machines, cutting devices and collecting devices for collecting the grass already cut.

In these machines, usually, a drive seat is provided arranged for housing a user who drives the machine and supervises the mowing operations.

Generally, the cut material is conveyed, through a pneumatic system, to collecting devices comprising a tray arranged for storing said cut material. The pneumatic system comprises a turbine, placed at an intermediate position between the cutting device and the tray, which produces an air stream transporting the cut material through a duct arranged at one side of the driving seat in a lateral position of the machine. The cut material is conveyed through a duct of flexible plastic material laterally positioned with respect to the machine.

A drawback of machines of this type is that the transporting means conveying the cut material may clog, since the collecting duct may be easily closed up, particularly when the grass which has to be cut is damp.

Another drawback of machines of this type is that a remarkable power is required with consequent fuel consumption: which is due mainly to the transporting means conveying the cut material and in particular to the turbine.

A further drawback of machines of this type is that they produce a high noise pollution due, also in this case, mainly to the loudness of the turbine.

Still a further drawback of machines of this type is that they are quite difficult to drive since exhausting manoeuvring is required for steering and it is impossible to execute an immediate and rapid turn-around.

A still further drawback of machines of this type is a remarkable encumbrance and an insufficient manoeuvrability due to the cut grass collecting devices which are laterally positioned with respect to the machines.

An object of the present invention is to provide a machine for cutting and collecting grass which is compact, manoeuvrable and rather noiseless.

Another object of the present invention is to provide a machine provided with a good collecting capacity in any environment or atmospheric conditions.

A further object of the present invention is to provide a machine easily drivable, safe and provided with high efficiency.

A still further object of the present invention is to provide a machine for cutting and collecting grass which allows an easy maintenance of the cutting devices.

In a first aspect of the present invention, a machine for cutting and collecting grass is provided comprising cutting means, suitable for mowing said grass, collecting means, suitable for collecting and storing said grass, moving means, suitable for actuating said machine and steering means, suitable for allowing said machine to be steered, characterized in that, said collecting means comprises mechanical collecting means associated with pneumatic collecting means.

In a preferred version the pneumatic collecting means conveys the cut grass along a quite short distance, and in particular from the region comprising the cutting means to the region comprising the mechanical collecting means. The air stream produced by the movement of the cutting means conveys the cut grass; therefore there is no need for a turbine to be installed. Once the entrance of the mechanical collecting means has been reached, the cut grass can be transferred into container means suitable for storing said grass in an exclusively mechanical manner.

Owing to this aspect of the invention, a remarkable energy saving and a powerful reduction of the acoustic noise are obtained; in addition, since the cut grass is conveyed substantially in a mechanical manner, a machine is obtained able to work, without occlusion of the cutting means and the collecting means, with any atmospheric condition. In particular, damp or wet grass may be collected.

In a second aspect of the present invention, a machine is provided for cutting and collecting grass comprising cutting means, suitable for mowing said grass, moving means, suitable for actuating said machine and steering means, suitable for allowing said machine to be steered, characterized in that, it further comprises positioning means for positioning said cutting means, suitable for vertically adjusting the distance of said cutting means from the ground.

In an advantageous version, the machine further comprises collecting means suitable for collecting and storing said grass.

In a further advantageous version, the positioning means comprises a hydraulic actuator having one end connected with a structural element of said machine and the other end connected with support means supporting a pair of wheels of said machine, said actuator being arranged for rotating the support means with respect to the structural element.

In a further advantageous version, the collecting means is placed in a central portion of the machine.

In a still further advantageous version, the cutting means comprises blade means contained below, and internally to, protective and containing case means, and is arranged so as to convey the cut grass toward an entrance of the collecting means. In such case, the collecting means is coupled with the case means through spherical joint coupling means. The blade means comprises a first blade and a second blade directly facing the collecting means and a third blade laterally arranged with respect to the collecting means. The first blade and the second blade are arranged for mowing the grass and conveying it toward the above-mentioned entrance and the third blade is arranged for mowing the grass and conveying it near the second blade. In the case means, near the above-mentioned second blade, an additional hollow is obtained suitable for receiving the grass transferred by the third blade.

In a further advantageous version, the collecting means comprises container means provided with turning means for turning the container means, suitable for unloading the cut grass.

In a still another advantageous version, the moving means comprises hydraulic motors associated to drive wheels of the machine, each of the hydraulic motor being supplied by a respective pump, for example a variable displacement volumetric pump. Each pump comprises a reversing device suitable for allowing reverse actuation of the machine, by inverting the suction and the supply of each pump. Preferably, an endothermic engine actuates the pumps.

In a further advantageous version, the machine further comprises controlling means for controlling the moving means arranged for actuating the machine, by adjusting the flow rate of each of the above-mentioned pumps. The controlling means comprises a pair of rods, each extending from a pump, connected to adjusting means through a pair of shackles. A first actuating cable, possibly connected with a steering wheel, suitable for controlling steering of the machine is associated with the adjusting means. At an intermediate point of the adjusting means a manoeuvring element, vertically extending below the adjusting means is hinged; with said manoeuvring element a second actuating cable is associated which may be connected to a pedal acceleration device, suitable for controlling acceleration of the machine. With one rod of the above-mentioned pair of rods a torsion spring is associated suitable for opposing to the stresses which the first actuating cable and the second actuating cable transmit to said rod.

Owing to this aspect of the invention, the cutting means may be easily cleaned and maintained, the raising of the whole machine not resulting necessary.

In a third aspect of the present invention, a machine for cutting and collecting grass is provided comprising cutting means, suitable for mowing said grass, collecting means, suitable for collecting and storing said grass, moving means, suitable for actuating said machine and steering means, suitable for allowing said machine to be steered, characterized in that said collecting means is placed in a central portion of said machine.

In an advantageous version, the machine further comprises positioning means for positioning the cutting means suitable for vertically adjusting the distance of the cutting means from the ground.

In a further advantageous version, the positioning means comprises a hydraulic actuator having one end connected with a structural element of said machine and the other end connected with support means for supporting a pair of wheels of said machine, such actuator being arranged for rotating the support means with respect to the above-mentioned structural element.

In a further advantageous version, the cutting means comprises blade means contained below, and internally to, protective and containing case means, and is arranged for conveying the cut grass toward an entrance of the collecting means. In such case, the collecting means is coupled with the case means through spherical joint coupling means. The blade means comprises a first blade and a second blade directly facing the collecting means and a third blade laterally arranged with respect to the collecting means. The first blade and the second blade are arranged for mowing the grass and transporting it toward the above-mentioned entrance and the third blade is arranged for mowing the grass and transporting it near the second blade. An additional hollow is obtained in the case means, near the above-mentioned second blade, for receiving the grass transferred by the third blade.

In a further advantageous version, the collecting means comprises container means provided with turning means for the container means, suitable for unloading the cut grass.

In a still another advantageous version, the moving means comprises hydraulic motors associated with drive wheels of said machine, each of the hydraulic motor being supplied by a respective pump, for example a variable displacement volumetric pump. Each pump comprises a reversing device suitable for allowing reverse actuation of the machine by inverting the suction and the supply of each pump. Preferably, an endothermic engine actuates the pumps.

In a further advantageous version, the machine further comprises controlling means for controlling the moving means arranged for actuating the machine, by adjusting the flow rate of each of the above-mentioned pump. The controlling means comprises a pair of rods, each extending from a pump, connected to adjusting means through a pair of shackles. A first actuation cable, possibly connected with a steering wheel, suitable for controlling steering of the machine is associated with the adjusting means. At an intermediate point of the adjusting means, a manoeuvring element, vertically extending below the adjusting means is hinged; with said manoeuvring element a second actuation cable is associated which may be connected to a pedal acceleration device, suitable for controlling acceleration of the machine. With one rod of the above-mentioned pair of rods a torsion spring is associated, suitable for opposing to the stresses which the first actuation cable and the second actuation cable transmit to said rod.

Owing to this aspect of the invention, a machine is obtained provided with reduced encumbrance and high manoeuvrability.

In a fourth aspect of the present invention, a machine is provided comprising moving means, suitable for actuating said machine and steering means, suitable for allowing said machine to be steered, characterized in that, said moving means comprises hydraulic motors associated with drive wheels of said machine.

In an advantageous version, a respective pump, for example a variable displacement volumetric pump, supplies each hydraulic motor. Each pump comprises a reversing device suitable for allowing reverse actuation of the machine by inverting the suction and the supply of the pump. The pumps which supply each of the above-mentioned hydraulic motors are actuated by an endothermic engine.

In a further advantageous version, the machine further comprises controlling means for the moving means arranged for actuating the machine, by adjusting the flow rate of each of the above-mentioned pumps. The controlling means comprises a pair of rods, each extending from a pump, connected with adjusting means through a pair of shackles. A first actuating cable suitable for controlling steering of said machine is associated with the adjusting means; said first actuating cable being able to be connected to a steering wheel of the machine. At an intermediate point of the steering means a manoeuvring element, vertically extending below the adjusting means, is hinged; with said manoeuvring element a second actuating cable is associated, which may be connected to a pedal acceleration device, suitable for controlling acceleration of the machine. With one rod of the above-mentioned pair of rods a torsion spring is associated suitable for opposing to the stresses which the first actuating cable and the second actuating cable transmit to said rod.

In a fifth aspect of the present invention, a machine is provided comprising moving means, suitable for actuating said machine and steering means, suitable for allowing said machine to be steered, characterized in that it further comprises controlling means for controlling said moving means, said controlling means being arranged for driving said machine.

In an advantageous version, the machine comprises hydraulic motors associated with drive wheels of the machine.

In another advantageous version, the controlling means is arranged for adjusting the flow rate of a pair of pumps, each associated with one of the above-mentioned motors. The controlling means comprises a pair of rods, each extending from one of the above-mentioned pumps, connected to adjusting means through a pair of shackles. A first actuating cable, which may be connected with a steering wheel of the machine, suitable for controlling steering of said machine, is associated with the adjusting means. At an intermediate point of the adjusting means a manoeuvring element, vertically extending below the adjusting means is hinged; with said manoeuvring element a second actuating cable, suitable for controlling acceleration of the machine is associated. Such second actuating cable may be connected to a pedal acceleration device of the machine. With one rod of the above-mentioned pair of rods a torsion spring is associated suitable for opposing to the stresses which the first actuating cable and the second actuating cable transmit to said rod.

Advantageously, the acceleration is obtained by increasing the flow rate in both the engines, whereas the steering is obtained by actuating the steering wheel of the vehicle so as to increase the flow rate in one of the motors and reduce the flow rate in the other one.

Otherwise, a single lever may substitute the steering wheel.

Owing to these aspects of the invention, it is possible to obtain a machine provided with high drive safety. Actually, since the possibility of steering depends only on the flow rate, when the advancing speed of the machine is maximal, or in any way high, the flow rate which may be designed for the steering action is minimal; otherwise, when the machine is stationary, the whole flow rate may be used for the steering action.

Therefore the machine is safe, since large stirring at high speed are not allowed, which may cause the machine to reverse. The invention can be better understood with reference to the enclosed drawings, which shows some not restrictive embodiments thereof, in which:
Figure 1 is a perspective front view of a machine according to the invention;
Figure 2 is a perspective side view of the machine of Figure 1;
Figure 3 is a side sketched view of the machine of Figure 1 showing the cutting means and the collecting means;
Figure 4 is a perspective side view, enlarged and broken of the machine of Figure 1, showing the cutting means of the machine in a raised position from the ground;
Figure 5 is a side perspective view enlarged and broken of the machine of Figure 1, showing the collecting means of the machine;
Figure 6 is a side perspective view enlarged and broken of the collecting means of the machine of Figure 1 in an intermediate position of the reversing operation;
Figure 7 is a view like that of Figure 2, showing the collecting means in a final reversing position;
Figure 8 is a transverse section of the lifting means of the machine of Figure 1 showing the transporting means;
Figure 9 is a block diagram of the actuating means of a machine according to the invention;
Figure 10, Figure 11 and Figure 12 are schematisations of the controlling means of the actuating means of a machine according to the invention;
Figure 13 is a sketched section taken along a vertical plane of the collecting means of a machine according to the invention provided with transferring means for transferring the mown grass.

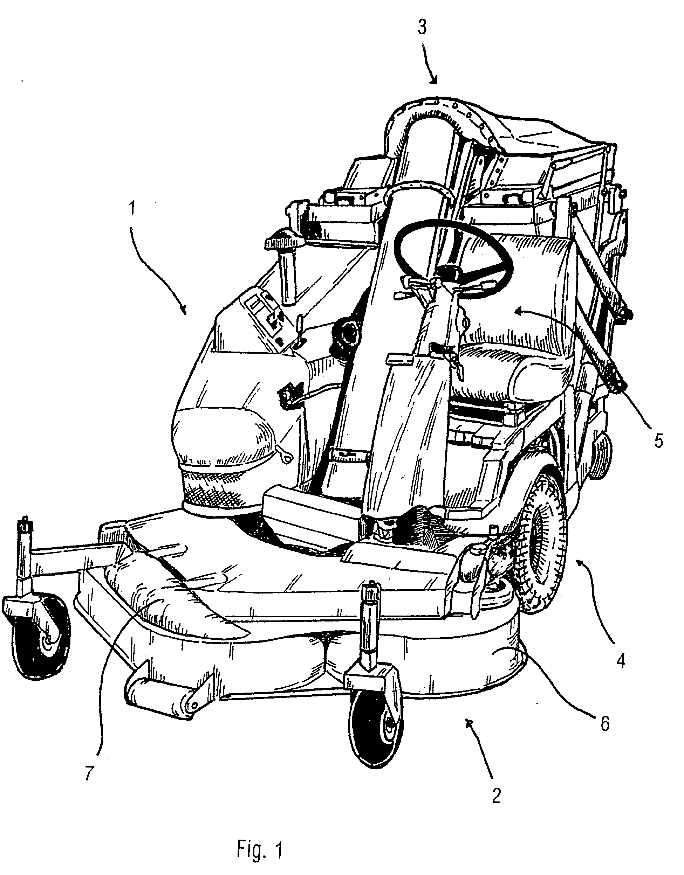

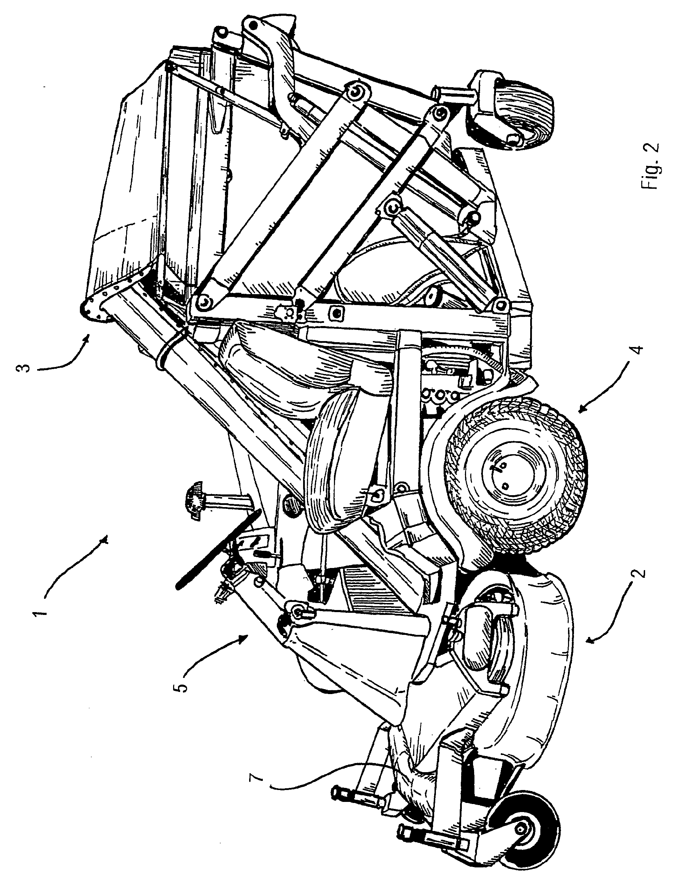

With reference to Figures 1 and 2, a lawn-mower machine 1 is shown comprising cutting means 2, suitable for mowing grass, collecting means 3, suitable for drawing the cut material and store it, moving means 4, suitable for actuating the machine and steering means 5, suitable for allowing the machine to be steered.

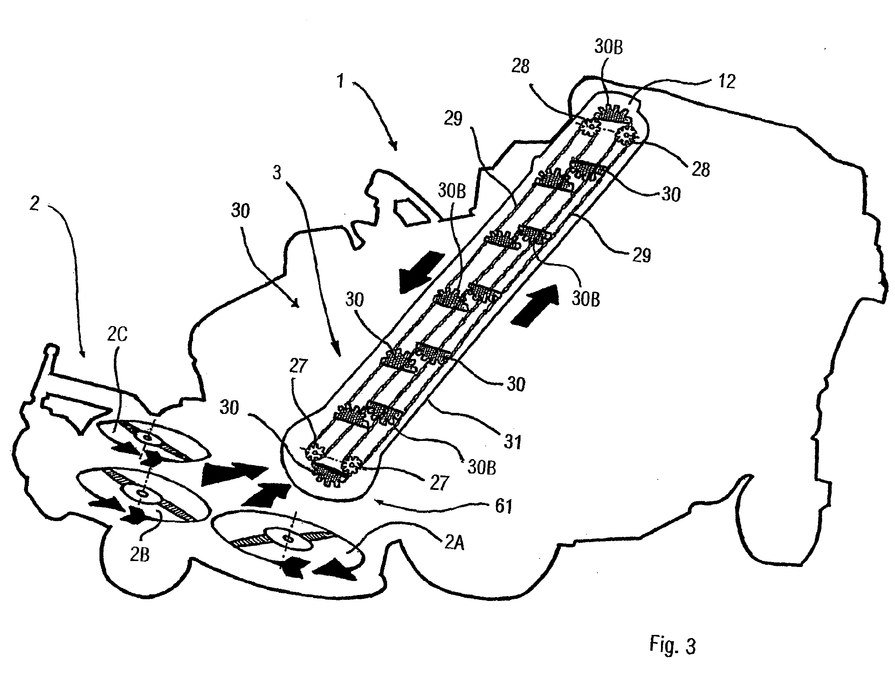

With reference to Figure 3, the cutting means 2 comprises three blades 2A, 2B e 2C contained below a protective case 6.

The blades 2A and 2B are placed near the region from which the mown material is drawn by the collecting means 3, therefore the blades cut the grass and place it directly at the entrance of the collecting means 3; the third blade 2C, instead, places the cut grass near the blade 2B, which conveys to the collecting region also the grass cut by the blade 2C. For preventing obstruction, near the blade 2B, i.e. at the point where the accumulation and the transit of cut grass are maximum, in the protective case 6 an additional hollow is realised, suitable for containing the exceeding grass, waiting for the exceeding grass being transferred to the collecting region.

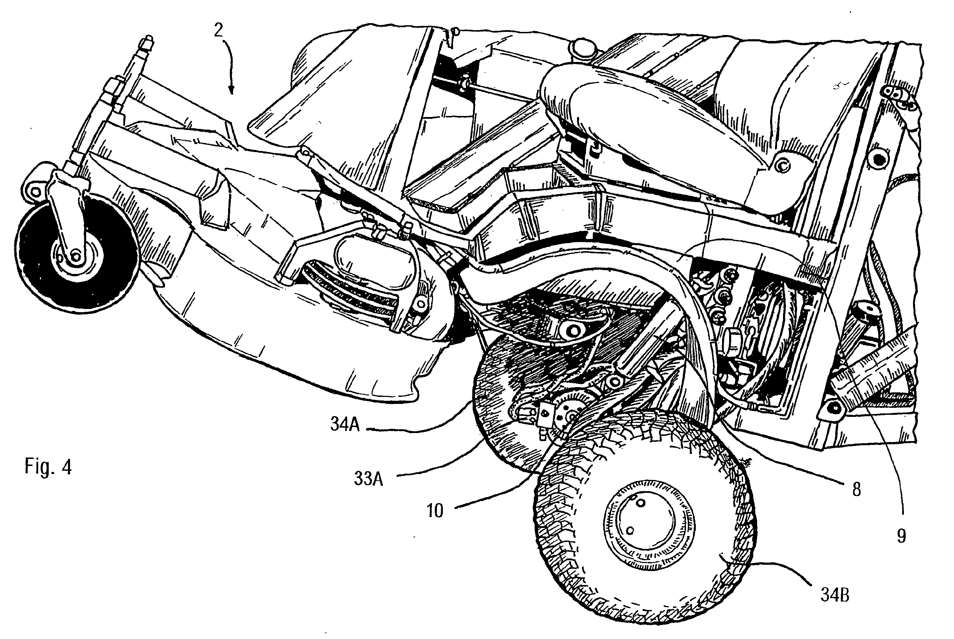

As shown in Figure 4, the cutting means 2 may be raised, together with the whole forecarriage of the machine, for allowing maintenance of the blades 2A, 2B and 2C and cleaning of the protective case 6. This operation is made possible by a hydraulic actuator 8 having one end connected with the frame 9 of the machine 1 and the other end connected with support means 10 connected to the drive wheels 34A, 34B of the machine 1. Therefore, when the hydraulic actuator 8 extends, the support means 10 rotates about a hinge axis, not represented, so lifting the frame 9, and the cutting means 2 associated thereto, from the ground. Once the cutting means 2 has been raised, it is possible to execute the maintenance thereof: in such manner the whole machine 1 is prevented from being raised.

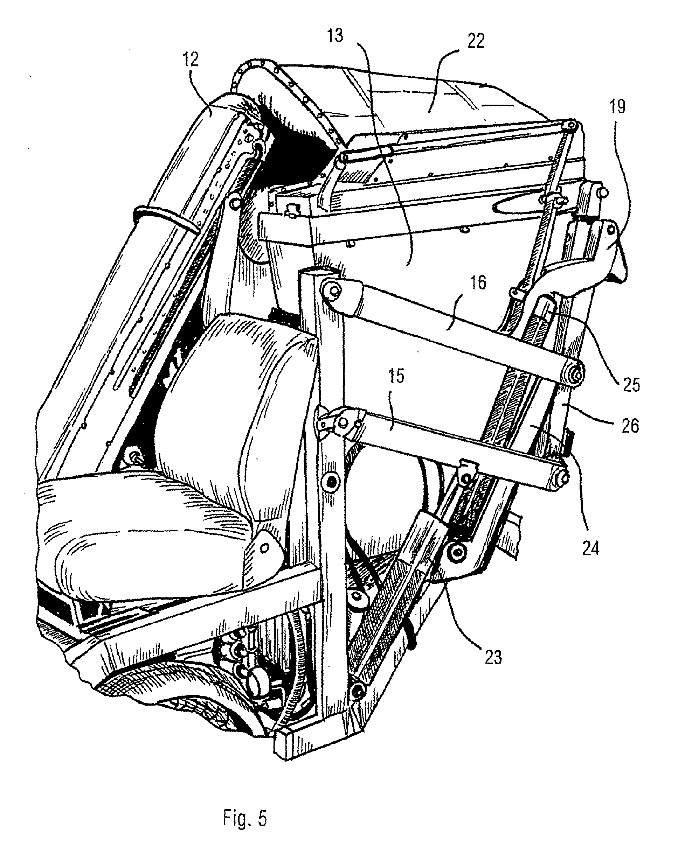

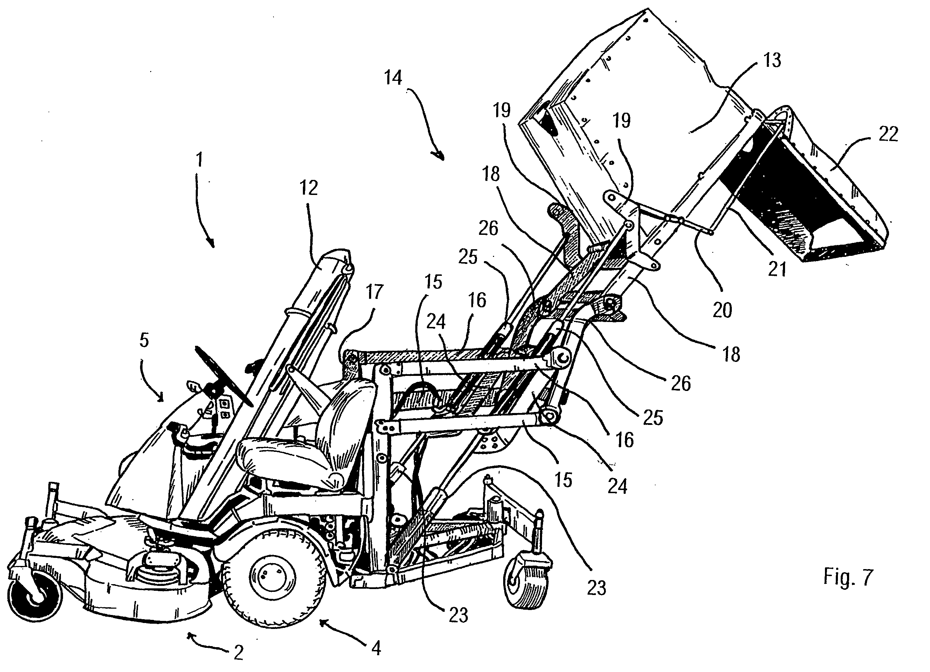

With reference to Figures 5 to 7, the collecting means 3 comprises raising means 12 and container means 13 provided with reversing means 14 of the container means 13, suitable for unloading the cut material.

The reversing means 14 comprises a first pair of arms 15 and a second pair of arms 16, each of the arms of said first pair of arms 15 and said second pair of arms 16 has one end rotatably coupled with the frame 17 of the machine 1 and the other end hinged to a pair of posts 26.

Support means 18 of the container means 13 is rotatably supported to the pair of posts 26; two connecting rods 19 connected with a pair of levers 20 acting on rod 21 connected with cover means 22 of the container means 13 are hinged to the support means 18.

A first pair of actuators 23 is interposed between the frame 17 of the machine 1 and the first pair of arm 15, whereas a second pair of actuators 25 is placed between a pair of elongate elements 24 fixed to the second pair of arms 16 and the pair of connecting rods 19.

The cut material is unloaded with the procedures described in the following.

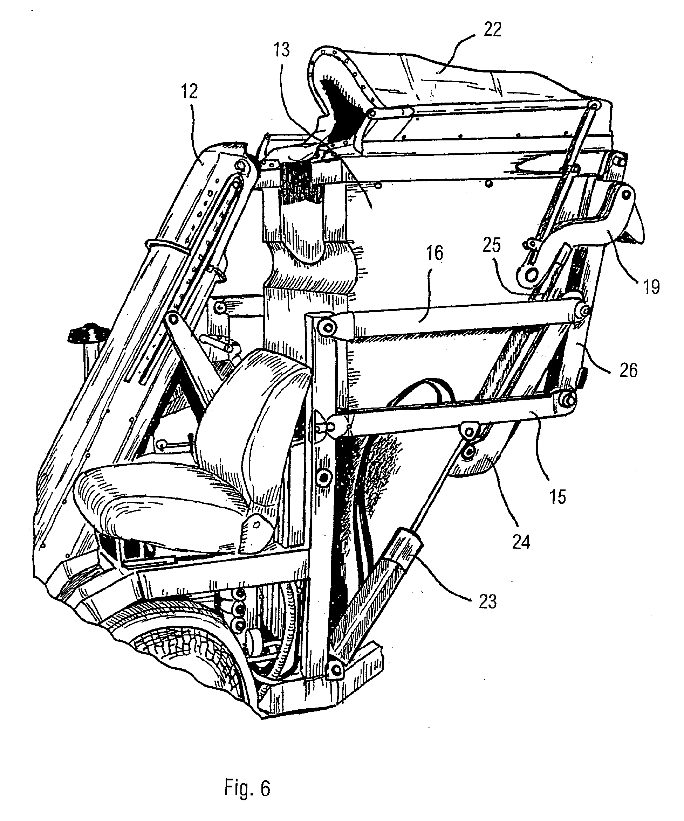

By acting on the first pair of actuator 23 the first pair of arms 15 and the second pair of arms 16 are rotated with the consequent elevation of the collecting means 13 passing from the working position represented in Figure 5 to a raised position represented in Figure 6. At this point, as the second pair of actuators 25 are operated, the pair of connecting rods 19 are actuated and the support means 18, fixed to the container means 13 are caused to rotate with respect to the pair of posts 26; this produces the reversal of the container means 13 and the consequent release of the material contained therein.

The pair of connecting rods 19 acts also on the pair of levers 20 which, by interaction with the rods 21, cause the cover means 22 to open.

With reference to Figure 3, the raising means 12 comprises tube case means 31, provided with an ogival-shaped end 91, constituting a spherical joint inside which a pair of chains 29 is placed arranged between a first pair of driving pinions 27, which are actuated by a not-represented motor shaft, and a second pair of idle pinions 28; a plurality of transporting means 30 is fixed to the pair of chains 29, having a notched profile 30B, suitable for drawing the cut material from the entrance of the tube case means 31 and transporting said cut material to the container means 13.

It is to be noted that the spherical joint allows the case 6 to rotate transversely and longitudinally without changing the entrance condition of the mown grass into the raising means 12.

Furthermore, it is to be noted that the raising means 12 are actuated by a torque limiter which stops the operation when an overload is applied.

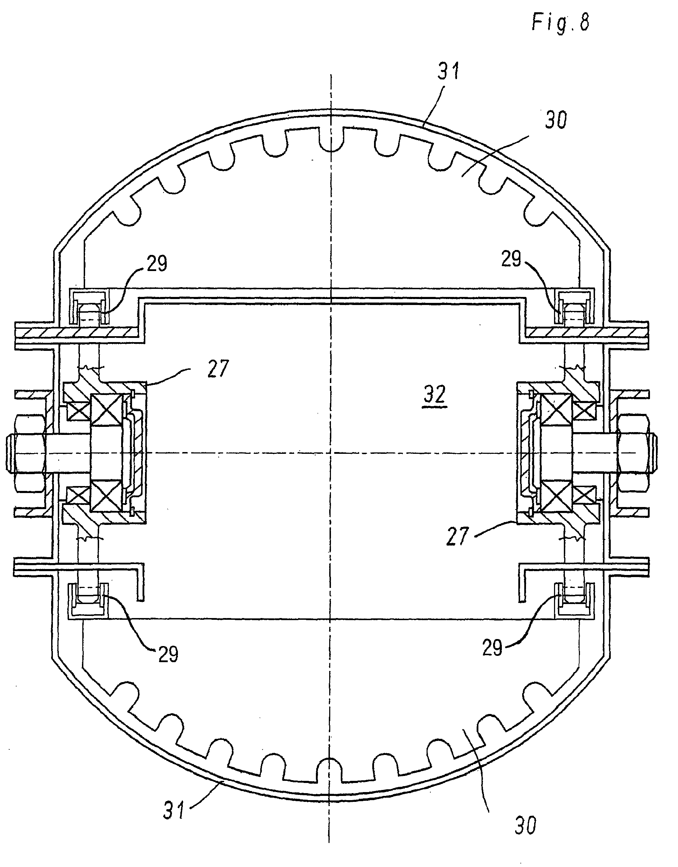

As shown in Figure 8, the section of the tube case means 31 is occupied, in the two side region, by the pair of chains 29 and, in the upper and lower regions, by the transporting means 30; in such manner a duct 32 id defined through which an air stream generated by the blades 2A, 2B, 2C may flow. The cut material is transported from the region where the blades 2A, 2B, 2C are placed to the container means 13 in a combined pneumatic and mechanical manner.

The raising means 12, due to the action of the transporting means 30, mechanically transfers the cut material and therefore is not affected by the atmospheric condition and in particular the possible humidity of the grass.

The material is transferred from the region of the blades 2A, 2B, 2C to the entrance of the tube case means 31 by means of a pneumatic transport carried out by the air stream produced by the movement of the blades 2A, 2B, 2C which tends to escape from the protective case 6 through the duct 32 prearranged therefor.

In such manner a pneumatic transport of the cut grass not requiring any turbine is obtained.

With reference to Figure 13, transferring means 51 is shown, arranged substantially for preventing accumulation of cut grass at the entry section 60 of the tube case means 31.

The transferring means comprises trowel means 53 suitable for rotating around a pivot 52 through which the trowel means is fixed to the above-mentioned tube case means 31. The transferring means 51 operates in the way described hereinafter.

The transporting means 30 interacts with the trowel means 53 and produces rotation thereof around the pivot 52 along the direction shown by the arrow F'; consequently the material deposited by the blades 2A, 2B, 2C on the trowel means 53 is released to the transporting means 30; in such manner the entry section 60 of the tube case means 31 is constantly kept free.

Since the transporting means 30 could be damaged by the impacts with the trowel means 52, reinforcing means 30A, suitable for supplying an increased mechanical strength, is associated with the transporting means 30.

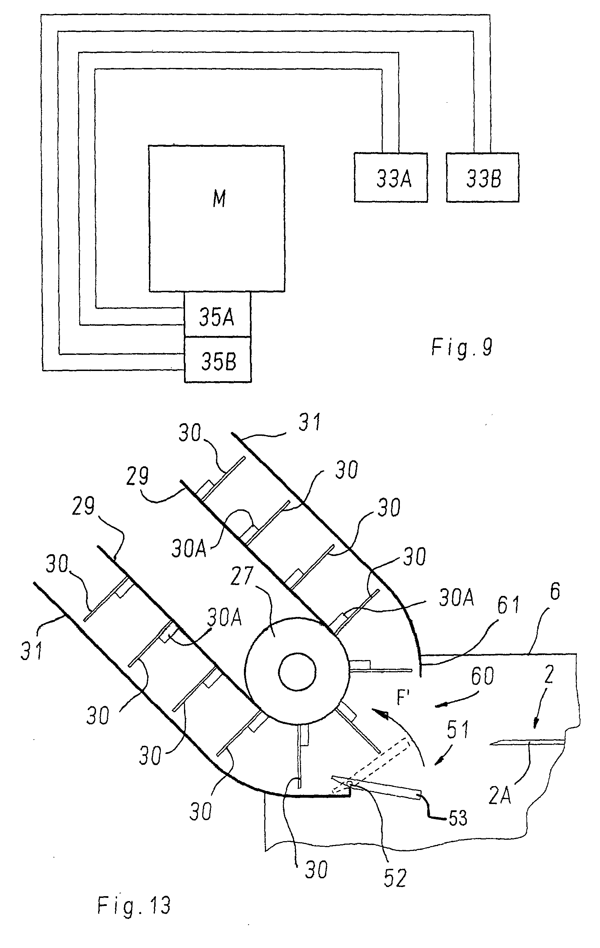

As shown in Figure 4, the moving means 4 comprises a pair of hydraulic motors 33A, 33B (Figure 9), each of which operates a respective drive wheel 34A, 34B of the machine 1.

As sketched in Figure 9, the machine 1 is provided with an internal combustion engine M which operates a pair of variable displacement rotating volumetric pumps 35A, 35B, which supply the hydraulic motors 33A, 33B. Each pump 35A, 35B is provided with a device, not represented, that reverses the suction and the supply for allowing the reverse operation of the machine 1.

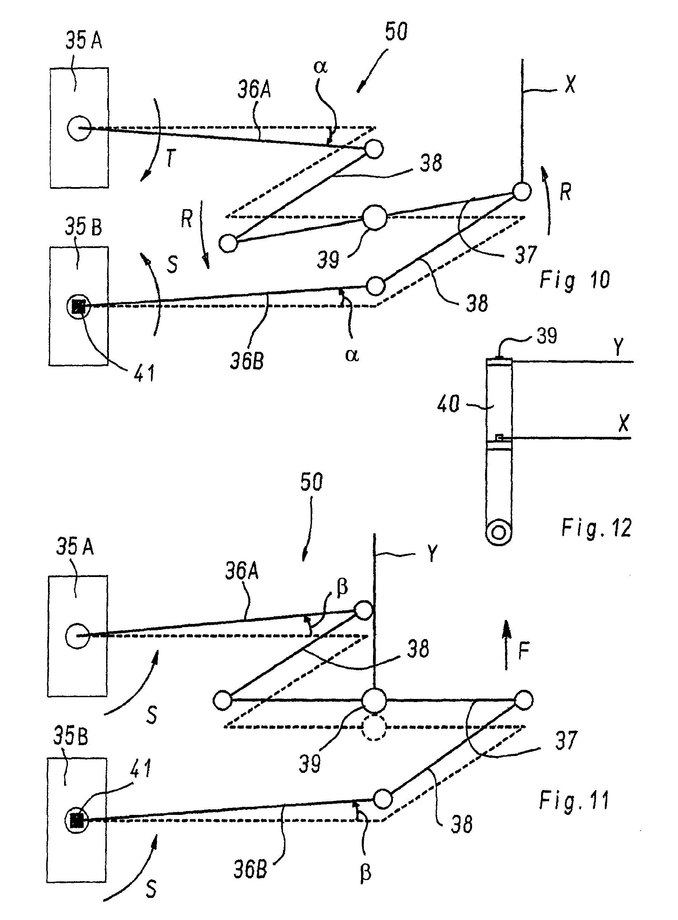

With reference to Figures 10, 11 and 12, controlling means 50 is shown comprising a pair of rods 36A, 36B extending from the pumps 35A, 35B; by acting on the rods 36A and 35B it is possible to change the flow of the above-mentioned pumps 35A, 35B. The rods 36A and 36B are connected to adjusting means 37 through a pair of shackles 38. A manoeuvring element 40 is vertically arranged below the adjusting means 37 so as to have an end hinged in the central point 39 of the above-mentioned adjusting means 37 and the other end hinged to a structural element of the machine 1.

A first actuating cable X is connected to one end of the adjusting means 37, whereas a second actuating cable Y is connected to the manoeuvring element 40.

The first actuating cable X is coupled to the steering wheel, whereas the second actuating cable Y is connected to a pedal control. In this manner the control of the machine is substantially analogous to the control of a motor vehicle.

Therefore to the adjusting means 37 a displacement caused by the actuating cable X, consisting in a rotation around its central point 39 according to the direction of the arrow R, is allowed and a further displacement, consisting in a translation along the direction of the arrow F, is also allowed.

Therefore, by acting on the adjusting means 37 it is possible to change the flow of the pumps 35A and 35B and consequently to control the speed and the steering of the machine 1 with the procedures illustrated in the following.

By acting on the actuating cable X the adjusting means 37 is caused to rotate around a central point 39 thereof, at the same time the shackles 38 move so rotating the rod 36B of an angle α according to the arrow S and rotating the rod 36A of the same angle α in the direction of the arrow T, said direction being opposite to the direction of the arrow S. Therefore, the flow of the pump 35B increases whereas the flow of the pump 35A decreases, consequently the flow to the hydraulic motor 33B and the speed of the wheel 34B associated thereto increase and the flow to the hydraulic motor 33A and the speed of the wheel 34A associated decrease: in such manner steering of the machine 1 is obtained.

By acting on the actuating cable Y the adjusting means 37 is caused to move, at the same time the shackles 38 move causing the rod 36B and the rod 36A to rotate according to the direction of the arrow S of an angle β. In such manner, the flow sent by the pumps 35B and 35A to the hydraulic motors 33B and 33A increases, consequently the speed of the wheel 34B and the wheel 34A, respectively associated with the hydraulic motor 33B and the hydraulic motor 33A, increases: in such manner acceleration of the machine 1 is obtained.

By acting on the arranged for reversing the suction and the supply of the pumps it is possible to control the speed of the machine 1 also in the reverse manoeuvring.

To the rod 36B a spring 41 is associated which allows actions opposite to the ones previously described to be carried out, i.e. deceleration of the machine 1 and return to straight running after steering. The spring 41 transmits to the rod 36B a torque inducing a rotation according to the direction of the arrow T when the cable Y and the cable X opposing to the above-mentioned rotation are released.

## Claims

1. Mowing machine, comprising cutting means (2) suitable for mowing grass, collecting means (3) suitable for collecting and storing said grass, moving means (4) suitable for actuating said machine (1) and steering means (5) suitable for allowing said machine (1) to be steered, **characterized in that** said collecting means (3) comprises mechanical collecting means (12) associated with pneumatic collecting means (32).

2. Machine according to claim 1, wherein said pneumatic collecting means comprises duct means (32) arranged for allowing an air stream generated by movement of said cutting means (2) to pass therethrough.

3. Machine according to claim 1, or 2, wherein said mechanical collecting means comprises raising means (12) for raising said grass extending from a region near to said cutting means (2).

4. Machine according to claim 3, wherein said raising means (12) comprises tube case means (31).

5. Machine according to claim 4, wherein, a plurality of transporting means (30) is movable internally to said tube case means (31), said transporting means (30) being arranged for drawing said grass from said region near to said cutting means (2) and convey said grass along said tube case means (31).

6. Machine according to claim 5, wherein a pair of chains (29) is placed internally to said tube case means (31), said pair of chains (29) being closed in a loop on a first pair of drive pinions (27) and a second pair of idle pinions (28) and being interconnected with said transporting means (30) for actuating said transporting means (30).

7. Machine according to claim 5, or 6, wherein said transporting means (30) has a notched profile (30B).

8. Machine according to one of claims 3 to 7, wherein said collecting means (3) further comprises transferring means (51) arranged for substantially preventing accumulation of said grass in said region near to said cutting means (2).

9. Machine according to claim 8, as appended to one of claims 5 to 7, wherein said transferring means (51) comprises trowel means (53) suitable for interacting with said transporting means (30) so as to project said grass toward said transporting means (30).

10. Machine according to claim 9, wherein reinforcing means (30A) suitable for increasing mechanical strength in the interaction with said trowel means (53) is associated with said transporting means (30).

11. Machine according to one of the preceding claims, and further comprising positioning means (8) for positioning said cutting means (2), suitable for vertically adjusting the distance of said cutting means (2) from the ground.

12. Machine according to claim 11, wherein said positioning means comprises a hydraulic actuator (8) having an end connected with a structural element (9) of said machine (1) and the other end connected with support means (10) for wheels (34A, 34B) of said machine (1).

13. Machine according to claim 12, wherein said actuator (8) is arranged for rotating said support means (10) with respect to said structural element (9).

14. Machine according to one of the preceding claims, wherein said collecting means (3) is placed in a central portion of said machine (1).

15. Machine according to one of claims 4 to 7, or according to one of claims 8 to 14 as appended to one of the claims 4 to 7, wherein said cutting means (2) comprises blade means (2A, 2B, 2C), contained below, and internally to, protective and containing case means (6), said blade means (2A, 2B, 2C) being arranged for conveying said grass toward an entrance (60) of said tube case means (31).

16. Machine according to claim 15, wherein said collecting means (3) is coupled with said case means (6) through spherical joint coupling means (61).

17. Machine according to claim 15, or 16, wherein said blade means comprises a first blade (2A) and a second blade (2B) directly facing said collecting means (3) and a third blade (2C) laterally arranged with respect to said collecting means (3).

18. Machine according to claim 17, wherein said first blade (2A) and said second blade (2B) are arranged for mowing said grass and transport it toward said entrance (60) and said third blade (2C) is arranged for mowing said grass and transport it near said second blade (2B).

19. Machine according to claim 17, or 18, wherein, in said case means (6), an additional hollow (7) is carried out near said second blade (2B).

20. Machine according to one of the preceding claims, wherein said collecting means (3) comprises container means (13) provided with reversing means (14) of said container means (13), suitable for unloading said grass.

21. Machine according to one of the preceding claims, wherein said moving means (4) comprises hydraulic motors (33A, 33B) associated with drive wheels (34A, 34B) of said machine (1).

22. Machine according to claim 21, wherein each of said hydraulic motors (33A, 33B) is fed by a respective pump (35A, 35B).

23. Machine according to claim 22, wherein each of said pumps (35A, 35B) is a variable displacement volumetric pump.

24. Machine according to claim 22, or 23, wherein each of said pumps (35A, 35B) comprises a reversing device suitable for allowing reverse actuation of said machine (1) by inverting suction and supply of each of said pump (35A, 35B).

25. Machine according to one of claims 22 to 24, and further comprising an endothermic engine (M) suitable for actuating each of said pumps (35A, 35B).

26. Machine according to one of the preceding claims, and further comprising controlling means (50) for controlling said moving means (4) arranged for allowing said machine (1) do be driven.

27. Machine according to claim 26 as appended to one of claims 22 to 25, wherein said controlling means (50) adjusts the flow rate of each of said pumps (35A, 35B).

28. Machine according to claim 26, or 27, wherein said controlling means (50) comprises a pair of rods (36A, 36B), each extending from one of said pumps (35A, 35B), connected to adjusting means (37) through a pair of shackles (38).

29. Machine according to claim 28, wherein a first actuating cable (X) suitable for controlling steering of said machine (1) is associated with said adjusting means (37).

30. Machine according to claim 29, wherein said first actuating cable (X) is connected with a steering wheel of said machine (1).

31. Machine according to one of claims 28 to 30, wherein a manoeuvring element (40) is hinged at an intermediate point (39) of said adjusting means (37).

32. Machine according to claim 31, wherein a second actuating cable (Y) suitable for controlling acceleration of said machine (1) is associated with said manoeuvring element (40).

33. Machine according to claim 32, wherein said second actuating cable (Y) is connected with a pedal acceleration device of said machine (1).

34. Machine according to claim 32, or 33, as appended to claim 29 or to claim 30 or to claim 31 as appended to claim 29 or 30, wherein a torsion spring (41) is associated with a rod (36B) of said pair of rods, suitable for opposing to the stresses which said first actuating cable (X) and said second actuating cable (Y) transmit to said rod (36B).
